(19) Europäisches Patentamt / European Patent Office / Office européen des brevets

(11) **EP 2 088 773 B1**

## (12) EUROPEAN PATENT SPECIFICATION

(45) Date of publication and mention
of the grant of the patent:
**16.10.2013   Bulletin 2013/42**

(51) Int Cl.:
***H04N 7/01*** *(2006.01)*

(21) Application number: **09150691.5**

(22) Date of filing: **16.01.2009**

(54) **Progressive-to-interlace conversion method, image processing apparatus, imaging apparatus**

Progressiv-zu-Interlace-Konvertierungsverfahren, Bildverarbeitungsvorrichtung, Bildvorrichtung

Procédé de conversion de progressif à entrelaçage, appareil de traitement d'images, appareil d'imagerie

(84) Designated Contracting States:
**DE FR GB**

(72) Inventor: **Kasahara, Ryosuke**
**Tokyo 143-8555 (JP)**

(30) Priority: **07.02.2008   JP 2008028069**

(74) Representative: **Schwabe - Sandmair - Marx**
**Patentanwälte**
**Stuntzstraße 16**
**81677 München (DE)**

(43) Date of publication of application:
**12.08.2009   Bulletin 2009/33**

(73) Proprietor: **Ricoh Company, Ltd.**
**Tokyo 143-8555 (JP)**

(56) References cited:
**JP-A- 5 115 057          US-A- 4 924 315**
**US-A1- 2005 168 598     US-B1- 6 392 706**

**Description**

CROSS-REFERENCE TO RELATED APPLICATIONS

The present application claims priority to Japanese priority document 2008-028069 filed in Japan on February 7, 2008.

BACKGROUND OF THE INVENTION

1. Field of the Invention

The present invention relates to a progressive-to-interlace conversion technology for converting a progressive input signal from an imaging device into an interlace output signal to a display device.

2. Description of the Related Art

In general, in an imaging apparatus and the like, an image is scanned from an imaging device sequentially along the scanning line in progressive. When outputting the progressive-scanned image to an NTSC-type display device in an interlaced form, a progressive-to-interlace conversion (PI conversion) is necessary.

Conventionally, the PI conversion outputs the odd- numbered scanning lines (first scanning line, third scanning line, ...), and then the even- numbered scanning lines (second scanning line, fourth scanning line, ...), for each frame. For example, Japanese Patent No. 3821415 discloses a means for performing an interlaced resolution conversion, in which an interlaced image signal is generated from a progressive image signal by the above described method.

The conventional PI conversion method that forms the first field by outputting the odd-numbered scanning lines, and then the second field by outputting the even-numbered scanning lines, for each progressive frame requires a frame memory for storing data of at least one picture, and particularly for a high-resolution imaging apparatus that requires a large-capacity memory, the apparatus itself becomes expensive.

As a measure to deal with the cost of the apparatus, it is possible to consider a system that outputs progressive-input image data with odd-numbered scanning lines of the first frame and the even-numbered scanning lines of the next frame in an alternate manner in time series for each frame. With this scheme, although a line buffer for data amount of several lines is enough for the system, half of the scanning lines is read and discarded for each frame, which results in a waste. In addition, the effective light amount becomes half, resulting in an insufficient light amount in a dark area.

Document US 2005/0168598 A1 discloses a video camera apparatus including means for converting the image read out from an image sensor in the progressive scan mode into an interlace scan signal. In the conversion process, adjacent lines of the input image data are added.

Document JP 05115057 A discloses a video signal conversion circuit for converting a video signal of the non-interlace system into a video signal of the interlace system. The circuit is provided with a comparator comparing luminance component of video signals and scanning lines at both sides with each object scanning line in between and selecting a larger luminance component and a subtractor circuit subtracting a luminance component of a video signal on an object scanning line from the luminance component selected by the comparator.

Document US 4,924,315 discloses a video signal processing system which converts video signals from a format of sequential scanning to that of interlaced scanning. The processing circuit of the system multiplies the input data with a coefficient and adds the multiplied data to the input data delayed by one line.

SUMMARY OF THE INVENTION

It is an object of the present invention to at least partially solve the problems in the conventional technology.

According to one aspect of the present invention, there is provided a progressive-to-interlace conversion method of converting progressive-input image data into interlaced-output image data by outputting image data of odd-numbered scanning lines and image data of even-numbered scanning lines in an alternate manner in time series. The progressive-to-interlace conversion method includes interlace outputting including adding pixel values of a pixel corresponding to image data of a current scanning line and a pixel corresponding to image data of a next scanning line; and first outputting including outputting image data obtained at the adding in an interlaced format.

Furthermore, according to another aspect of the present invention, there is provided an image processing apparatus including a progressive- to- interlace converting unit that converts progressive- input image data into interlaced-output image data based on a progressive- to- interlace conversion method according to the present invention.

Moreover, according to still another aspect of the present invention, there is provided an imaging apparatus including an imaging device that outputs progressive image data; and an image processing apparatus according to the present invention.

The brightness of color is determined, for example, based on the gain amount of an automatic gain control (AGC) circuit of a sensor. With this scheme, degradation of the image quality can be reduced in areas other than the dark area.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

Fig. 1 is an overall block diagram of a processing system of an imaging apparatus according to an embodiment of the present invention;

Fig. 2A is a schematic diagram of a Bayer color filter array for a G-signal;

Fig. 2B is a schematic diagram of the Bayer color filter array for an R-signal;

Fig. 2C is a schematic diagram of the Bayer color filter array for a B-signal;

Fig. 3 is a block diagram of an MTF correcting unit according to the embodiment;

Fig. 4 is a schematic diagram for illustrating an example of an FIR filter;

Fig. 5 is a schematic diagram for explaining a conventional progressive-to-interlace conversion method;

Fig. 6 is a schematic diagram for explaining a progressive-to-interlace conversion method according to the present invention; and

Fig. 7 is a block diagram of a progressive-to-interlace converting unit according to the embodiment.

DETAILED DESCRIPTION OF THE PREFERRED EMBODIMENTS

Exemplary embodiments of the present invention will be explained in detail below with reference to the accompanying drawings. An imaging apparatus that takes an image of a subject with an optical system having a wide angle of view with a large chromatic aberration of magnification and a large distortion is taken as an embodiment of the present invention, with a configuration in which an image processing system performs corrections of the chromatic aberration of magnification and the distortion as well as a progressive-to-interlace conversion according to the present invention. However, the present invention is not limited to the embodiment. In addition, although the color components of an image is considered to be the three primary additive colors, red (R), green (G), and blue (B), the three primary subtractive colors, yellow (Y), magenta (M), and cyan (C) can also be employed.

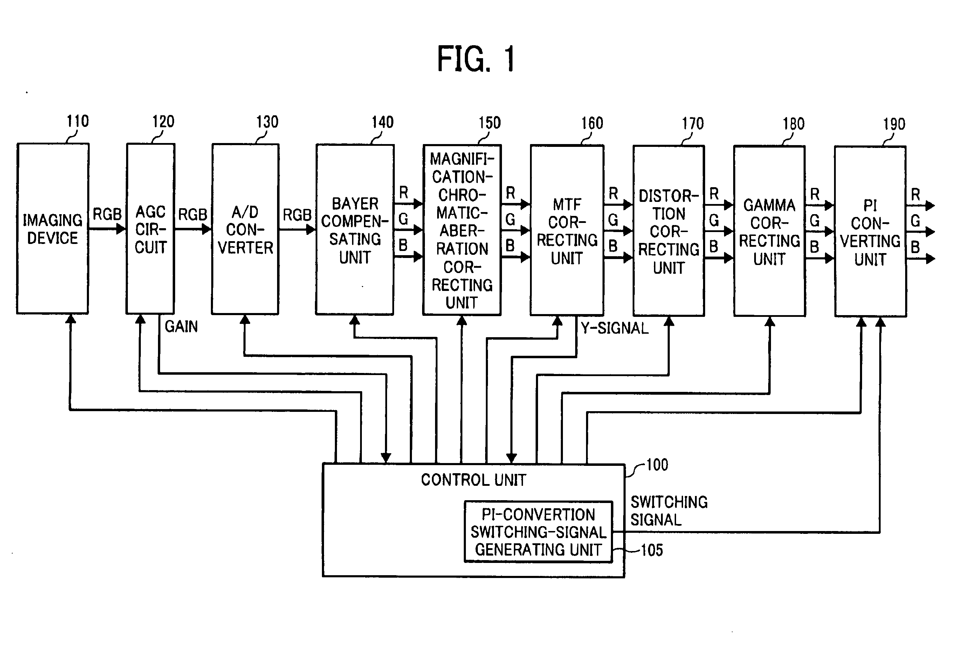

Fig. 1 is an overall block diagram of a processing system of an imaging apparatus according to an embodiment of the present invention. The imaging apparatus further includes an operating unit, an image display unit, an optical system, a mechanism for shutter speed control and lens aperture adjustment, and the like, which are omitted in Fig. 1. Although the imaging apparatus is assumed to be used as, for example, a vehicle camera device, it can be applied to other various usages.

As shown in Fig. 1, a control unit 100 controls operations of various units in pipeline by providing necessary signals (clocks, horizontal/ vertical synchronization signals, etc) to the units. The control unit 100 includes a progressive-to- interlace (PI)- conversion switching- signal generating unit 105 that generates a switching signal to control a switching of a PI conversion method at a PI converting unit 190 according to the brightness.

An imaging device 110 is configured with, for example, a charge coupled device (CCD) and a complementary metal-oxide semiconductor (CMOS) sensor for converting an optical image taken by an optical system (not shown) having a wide angle of view with a large chromatic aberration of magnification and a large distortion into an electrical signal (image signal). The imaging device 110 includes a Bayer color filter array, such that a Bayer-arrayed RGB image signal is sequentially output in progressive based on the control signal (clocks, horizontal/vertical synchronization signal, etc) from the control unit 100.

An AGC circuit 120 amplifies the analog image signal output from the imaging device 110 to a predetermined value. The gain amount of the AGC circuit 120 is determined to be an appropriate value by a tradeoff between a required brightness and a noise amount. In the embodiment, the PI-conversion switching-signal generating unit 105 of the control unit 100 determines the brightness from the gain amount of the AGC circuit 120 and sends the switching signal to the PI converting unit 190.

An analog-to-digital (A/D) converter 130 converts the Bayer-arrayed RGB image signal, which is the analog signal amplified by the AGC circuit 120, into a digital signal (image data) and outputs the image data to a Bayer compensating unit 140. The image data is formed with, for example, 8 bits for each of RGB.

The Bayer compensating unit 140 receives the Bayer-arrayed RGB image data, which is converted into the digital signal, generates image data of entire coordinate positions by a linear interpolation, and outputs the image data to a magnification-chromatic-aberration correcting unit 150.

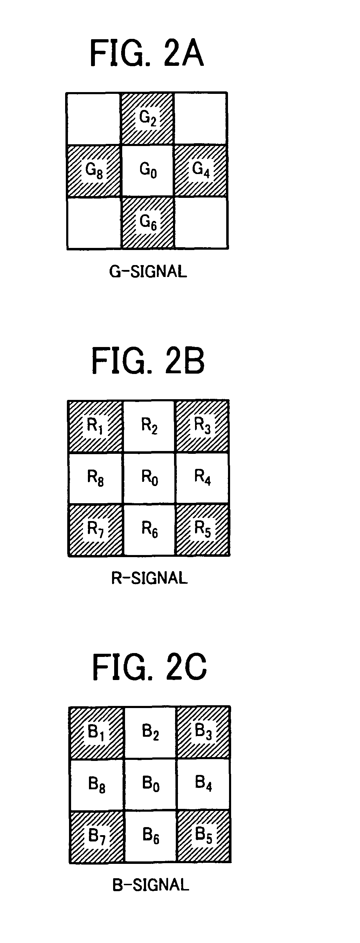

Figs. 2A to 2C are schematic diagrams of the Bayer color filter array, where Go, $R_2$, $R_4$, $R_6$, $R_8$, and $R_0$ are obtained by Equations (1) to (6).

$$G_0 = (G_2 + G_4 + G_6 + G_8) / 4 \tag{1}$$

$$R_2 = (R_1 + R_3) / 2 \tag{2}$$

$$R_4 = (R_3 + R_5) / 2 \tag{3}$$

$$R_6 = (R_5 + R_7) / 2 \tag{4}$$

$$R_8 = (R_1 + R_7) / 2 \tag{5}$$

$$R_0 = (R_1 + R_3 + R_5 + R_7) / 4 \tag{6}$$

$B_2$, $B_4$, $B_6$, $B_8$, and $B_0$ are the same as the case of $R_2$, $R_4$, $R_6$, $R_8$, and $R_0$.

Although the embodiment deals with an imaging device employing the Bayer color filter array, the effect can be obtained for an imaging device employing other type of color filter array of CMYG array or RGB+Ir (infrared). Particularly, the imaging device having a color filter array of four colors requires a low latency memory or a 4-port RAM, expecting a high effect, compared to a three color type such as RGB.

The magnification- chromatic- aberration correcting unit 150 receives the RGB image data, which is Bayer-compensated, performs a coordinate conversion (magnification- chromatic- aberration coordinate conversion) separately for each of the RGB color components using a predetermined polynomial or the like, and outputs magnification- chromatic- aberration corrected RGB image data. Although the chromatic aberration of magnification is different for each of the color components, the magnitude of the difference is small. Therefore, it is possible to use a small- capacity low- latency memory or a small- capacity multiple- port memory (such as an SRAM) for the coordinate conversion in the magnification-chromatic- aberration correction.

An MTF correcting unit 160 receives the magnification-chromatic-aberration corrected RGB image data, performs an MTF correcting process on the image data by using an FIR filter, and outputs MTF-corrected RGB image data.

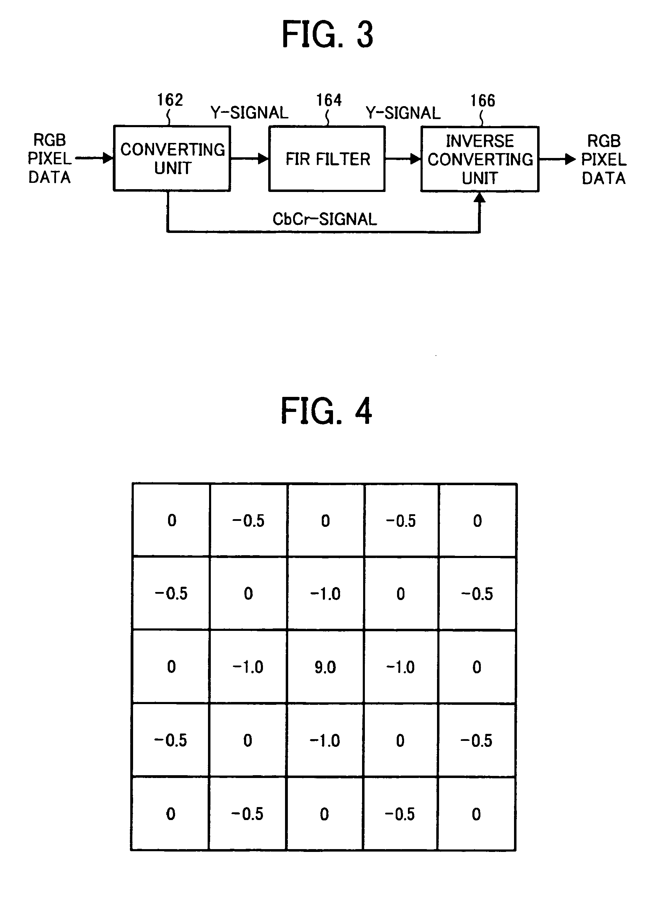

Fig. 3 is a block diagram of the MTF correcting unit 160. A converting unit 162 converts RGB image data into YCbCr image data based on Equations (7) to (9).

$$Y = 0.299R + 0.587G + 0.114B \tag{7}$$

$$Cr = 0.500R - 0.419G - 0.081B \tag{8}$$

$$Cb = -0.169R - 0.332G + 0.500B \tag{9}$$

An FIR filter ($5 \times 5$ filter) 164 receives a brightness signal Y from among YCbCr and performs a predetermined MTF correction of the signal. Fig. 4 is a schematic diagram for illustrating an example of the FIR filter. By performing a filtering of the Y-signal only (MTF correction), it is possible to obtain a high-quality image with an amplification of color noise suppressed. Because the filtering is performed on the Y-signal, the MTF correction needs to be performed after the magnification-chromatic-aberration correction. If the MTF correction is performed after a distortion correction, because a calculation error is likely to occur in the distortion correction due to a large conversion distance of the coordinate conversion, the error becomes amplified by the MTF correction, resulting in an undesirable effect on the image quality. For this reason, the MTF correction should preferably be performed after the magnification-chromatic-aberration correction and before the distortion correction as the embodiment.

An inverse converting unit 166 receives the CbCr signal and the MTF-corrected Y-signal, and outputs inverse-converted RGB image data based on Equations (10) to (12).

$$R=Y+1.402Cr \qquad (10)$$

$$G=Y-0.714Cr-0.344Cb \qquad (11)$$

$$B=Y+1.772Cb \qquad (12)$$

The PI-conversion switching-signal generating unit 105 of the control unit 100 can also determined the brightness from the brightness signal Y obtained at the MTF correcting unit 160.

A distortion correcting unit 170 receives the magnification-chromatic-aberration and MTF corrected RGB image data, performs a coordinates conversion (distortion coordinates conversion) common to each of the RGB color components with a predetermined polynomial or the like, and outputs distortion corrected RGB image data. Although the coordinates conversion at the distortion correction requires a large memory capacity (maximum size of one picture) compared to the memory size for the magnification-chromatic-aberration correction, it is possible to use a high-latency memory (such as a DRAM) because one port is enough to perform the conversion. It is also possible to correct the chromatic aberration of magnification and the distortion at the same time.

A Gamma correcting unit 180 receives the RGB image data output from the distortion correcting unit 170, performs a predetermined Gamma correcting process using look-up tables for the RGB components, respectively, and outputs Gamma corrected RGB image data.

The RGB image data output from the Gamma correcting unit 180 is a progressive signal of the scanning line order. The PI converting unit 190 converts the progressive signal output from the Gamma correcting unit 180 into an interlaced signal for each of the RGB image data, and transmits the interlaced signal to an NTSC-type display device (not shown).

The above descriptions are for the overall operation of the imaging apparatus according to the embodiment shown in Fig. 1. In what follows, the explanation will be given for the PI converting unit 190, which is a main component of the present invention.

An explanation will be given first for a progressive-to-interlace convention method employed in the present invention.

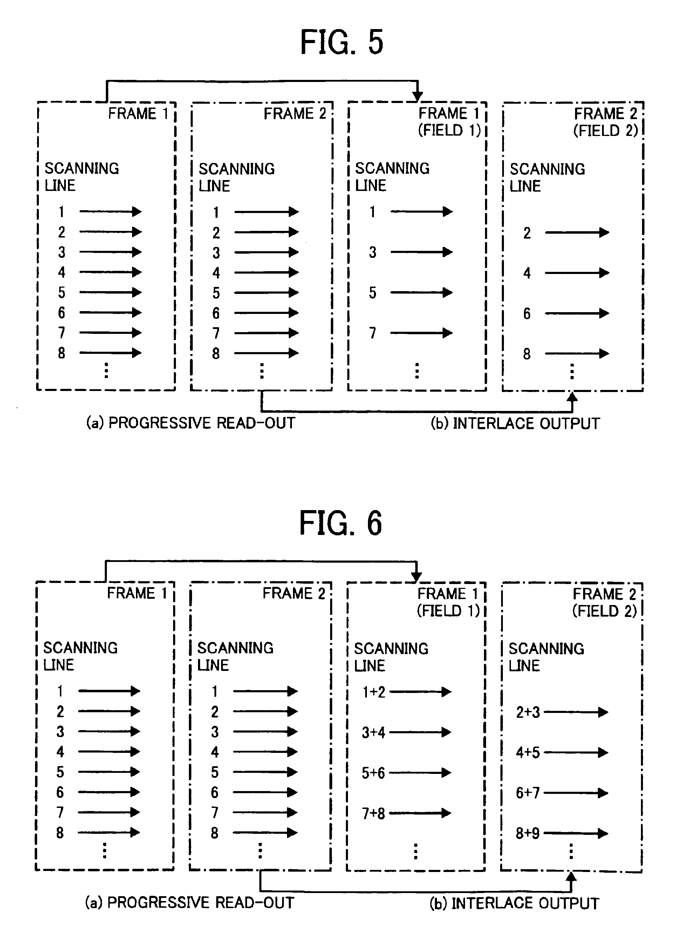

Fig. 5 is a schematic diagram for explaining a conventional progressive-to-interlace conversion method. As shown in (a) of Fig. 5, an RGB image signal is read out in the order of scanning lines of 1, 2, 3, ... for each frame from the imaging device 110 that performs a progressive read-out of the image signal, and finally the Gamma corrected RGB image data is similarly output in the order of the scanning lines of 1, 2, 3, ... for each frame from the Gamma correcting unit 180. When outputting this RGB data to a display device of the NTSC type or the like, a progressive-to-interlace conversion is necessary. The conventional progressive-to-interlace convention method, as shown in (b) of Fig. 5, outputs image data of the odd-numbered scanning lines alternately, such as 1, 3, 5, ..., for the first frame (first field at an interlace output side), and outputs image data of the even-numbered scanning lines alternately, such as 2, 4, 6, ..., for the second frame, repeatedly for each of the frames. In this conventional progressive-to-interlace convention method, a half of the scanning lines are discarded at each frame, which results in a waste of a half of the light amount, causing an occurrence of an insufficient light amount in a dark area.

Fig. 6 is a schematic diagram for explaining the progressive-to-interlace conversion method according to the present invention. In Fig. 6, (a) is the same as (a) of Fig. 5, showing the progressive read-out of the image signal. The progressive-to-interlace convention method according to the present invention, as shown in (b) of Fig. 6, outputs a sum of pixel values of pixels corresponding to respective two scanning lines of 1 and 2, 3 and 4, 5 and 6, ... of the first frame of the progressive input to the first frame (first field at the interlace output side), and outputs a sum of pixel values of pixels corresponding to respective two scanning lines of 2 and 3, 4 and 5, 6 and 7, ... of the second frame of the progressive input to the second frame (second field at the interlace output side), repeatedly for each of the frames. In the method according to the present invention, the progressive-to-interlace convention is possible without losing the light amount (the light amount is two times compared to the conventional method shown in Fig. 5), and therefore a sufficient light amount can be obtained in a dark area. This makes it possible to realize a highly sensitive imaging apparatus.

On the other hand, with the progressive-to-interlace convention method according to the present invention, the resolution in the longitudinal direction is degraded, causing a degradation of the image quality. Although this degradation of the image quality is not that significant, this problem can be solved by switching the methods in appropriate such that the method according to the present invention is applied only when the light amount is not sufficient (sensitivity priority) and the conventional method is applied in other cases (image quality priority). For example, by reading a change of the light amount from the brightness of a picture or a gain amount of an imaging device, the conventional progressive-to-interlace convention method shown in Fig. 5 and the progressive-to-interlace convention method according to the present invention shown in Fig. 6 can be switched according to the brightness of color.

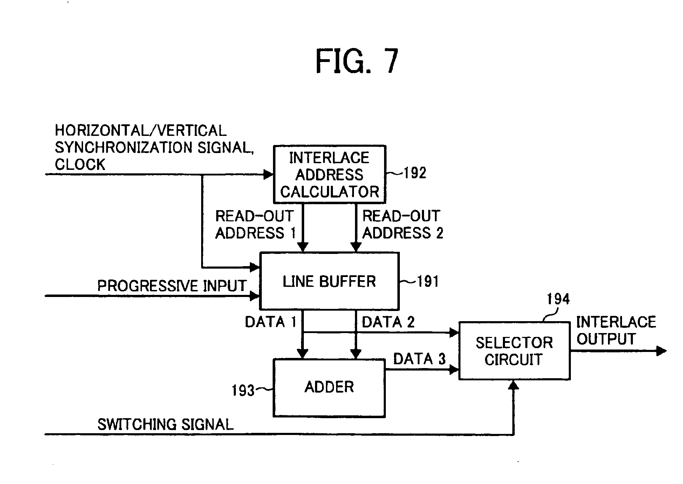

Fig. 7 is a block diagram of the PI converting unit 190. The progressive-input image data is sequentially accumulated in a line buffer 191 based on a horizontal/vertical synchronization signal and a clock. The line buffer 191 can be the one having at least two lines (scanning lines), so that image data of at least past two lines are accumulated, and image data of old lines are sequentially discarded. The horizontal/vertical synchronization signal is applied to an interlace address calculator 192. The interlace address calculator 192 calculates a read-out address of the line buffer 191 such that the image data accumulated in the line buffer 191 are read out in interlaced format, and outputs the calculated address. Specifically, the interlace address calculator 192 reads out an odd-numbered line address and a pixel address in the corresponding odd-numbered line and an even-numbered line address and a pixel address in the corresponding even-numbered line alternately for every other frame, and sequentially outputs them as a read-out address 1. At the same time, the interlace address calculator 192 reads out a line address of the next line and a pixel address of the corresponding line, and outputs them as a read-out address 2.

From the line buffer 191, image data of the scanning lines 1, 3, 5, ... are read out as data 1 and image data of the scanning lines 2, 4, 6, ... are read out as data 2 for a certain frame (a certain field at the interlace output side), and for the next frame, image data of the scanning lines 2, 4, 6, ... are read out as data 1 and image data of the scanning lines 3, 5, 7, ... are read out as data 2, based on the read-out address 1 and the read-out address 2 output from the interlace address calculator 192, which is repeated alternately for every other frame.

The data 1 and the data 2 read out of the line buffer 191 are input to an adder 193, the pixel values of the pixels corresponding to the two scanning lines are added sequentially, and the result of the addition is output to a selector circuit 194 as data 3, which will be the first input of the selector circuit 194. In the second input of the selector circuit 194, the data 1 read out of the line buffer 191 is input as it is. The selector circuit 194 selects the data 1 or the data 3 based on a switching signal from the PI-conversion switching-signal generating unit 105, and outputs the selected data. When the data 1 is selected, the image data of the conventional interlaced format shown in (b) of Fig. 5 is output, and when the data 3 is selected, the image data of the interlaced format according to the present invention shown in (b) of Fig. 6 is output. The switching signal makes a switching such that the data 1 is selected when the brightness of color is equal to or higher than a predetermined level (image quality priority) and the data 3 is selected otherwise (sensitivity priority).

The data added in the adder 193 are R-signal, G-signal, and B-signal and brightness information such as Y-signal only, and for example, in the case of a YUV-signal and a YCbCr-signal, a UV-signal and a CbCr-signal can be output as an average value of the two data or a value of either one of the two data.

In the PI-conversion switching-signal generating unit 105 generates a switching signal for controlling a switch of the PI conversion methods to be used at the PI converting unit 190 according to the brightness of color. Specifically, the switch of the PI conversion methods is performed such that the conventional PI conversion method is used when the brightness of color is equal to or higher than a predetermined level (select the data 1), and the PI conversion method according to the present invention is used otherwise (select the data 3).

As a method of generating the switching signal based on the brightness of color at the PI-conversion switching-signal generating unit 105 can be as follows. The following method is merely an example, which means that any kind of method can be used as long as a determination of the brightness of color is possible.

(i) In general, the output signal of the imaging device 110 is amplified by the AGC circuit 120 before being analog-to-digital converted at the A/D converter 130. The gain of the AGC circuit 120 is determined to an appropriate value based on a tradeoff between a required brightness of color of a picture and a noise amount. However, when the brightness of color is decreased and the gain is equal to or larger than a predetermined value, the noise amount becomes larger than a tolerable range. The switching signal is generated by determining the brightness of color from the gain of the AGC circuit 120 such that the conventional PI conversion method is used when the gain is lower than a predetermined value and the PI conversion method according to the present invention is used when the gain is equal to or higher than the predetermined value. When the gain is equal to or higher than the predetermined value so that the PI conversion method is switched to the PI conversion method according to the present invention, the brightness of color of the picture can be increased without increasing the noise by holding the gain.

(ii) An image of a required brightness of color can be obtained by adjusting the gain of the AGC circuit 120, the shutter speed of the imaging device, and the aperture of a lens. The switching signal is generated by determining the brightness of color from the shutter speed and the aperture of the lens so that the PI conversion method is switched between the conventional PI conversion method and the PI conversion method according to the present invention.

(iii) The brightness of color is calculated from a total of brightness of a whole picture, or in some cases, a sum of brightness obtained by putting a weight on a subject at the center of a picture and the like, based on the brightness signal Y obtained at the MTF correcting unit 160. The switching signal is generated based on the calculated brightness of color so that the PI conversion method is switched between the conventional PI conversion method and the PI conversion method according to the present invention.

(iv) By installing a separate illuminance sensor, the switching signal is generated based on an output of the illuminance sensor so that the PI conversion method is switched between the conventional PI conversion method and the PI conversion method according to the present invention.

As described above, according to one aspect of the present invention, a line buffer for data amount of a few lines is enough for a progressive-to-interlace conversion, and furthermore, an effective use of the scanning lines and an increase of the effective light amount can be achieved without wasting the half of the scanning lines in each frame. Therefore, a high-sensitive imaging apparatus can be provided with an improvement of light amount shortage in a dark area at low cost.

## Claims

1. A method for converting progressive input image data into interlaced output image data, comprising the steps of if the brightness of the image is not equal and not higher than a predetermined level, successively selecting either each of the odd numbered scanning lines or each of the even numbered scanning lines of the input image data as current scanning line, adding the image data of the next scanning line immediately below the respective current scanning line to the image data of the current scanning line for each selected scanning line and outputting the result of the addition as the output image data, or
if the brightness of the image is equal to or higher than a predetermined level, selecting either all odd numbered lines or all even numbered lines and outputting the selected lines as the output image data.

2. The progressive-to-interlace conversion method according to claim 1, wherein the adding includes adding brightness values of the image data.

3. The progressive-to-interlace conversion method according to claim 1 or 2, further comprising determining the brightness of the image based on a gain amount of an automatic gain control circuit (120) that amplifies the image data according to the brightness of the image.

4. An image processing apparatus comprising a progressive-to-interlace converting unit (190) that converts progressive-input image data into interlaced-output image data by carrying out the progressive-to-interlace conversion method according to any one of claims 1 to 3.

5. An imaging apparatus comprising:

   an imaging device (110) that outputs progressive image data; and
   an image processing apparatus according to claim 4.

## Patentansprüche

1. Ein Verfahren zum Konvertieren progressiver Eingangs- Bilddaten in interlaced- Ausgangs- Bilddaten, aufweisend die Verfahrensschritte
wenn die Helligkeit des Bildes nicht gleich und nicht größer als ein vorgegebenes Niveau ist, des sukzessiven Auswählens entweder jeder der ungeradzahligen Abtastzeilen oder jeder der geradzahligen Abtastzeilen der Eingangs- Bilddaten als die aktuelle Abtastzeile, des Addierens der Bilddaten der nächsten Abtastzeile unmittelbar unterhalb der jeweiligen aktuellen Abtastzeile zu den Bilddaten der aktuellen Abtastzeile für jede ausgewählte Abtastzeile und des Ausgebens des Ergebnisses der Addition als Ausgangs- Bilddaten, oder wenn die Helligkeit des Bildes gleich oder größer ist als ein vorgegebenes Niveau, des Auswählens entweder aller ungeradzahligen Zeilen oder aller geradzahliger Zeilen und des Ausgebens der gewählten Zeilen als Ausgangs- Bilddaten.

2. Das progressiv- zu- interlaced- Konvertierungsverfahren gemäß Anspruch 1, wobei das Addieren das Addieren der Helligkeitswerte der Bilddaten enthält.

3. Das progressiv- zu- interlaced- Konvertierungsverfahren gemäß Anspruch 1 oder 2, weiter aufweisend das Bestimmen der Helligkeit des Bildes basierend auf einem Verstärkungsfaktor eines automatischen Verstärkungskontrollschaltkreises (120), der die Bilddaten gemäß der Helligkeit des Bildes verstärkt.

4. Ein Bildbearbeitungsgerät enthaltend eine progressiv- zu- interlaced- Konvertierungseinheit (190), die progressive Eingangs- Bilddaten in interlaced- Ausgangs- Bilddaten konvertiert durch Ausführen des progressiv- zu- interlaced-Konvertierungsverfahrens gemäß einem der Ansprüche 1 bis 3.

5. Ein bildgebender Apparat, aufweisend:

ein bildgebendes Gerät (110), das progressive Bilddaten ausgibt; und
ein Bildbearbeitungsgerät gemäß Anspruch 4.

**Revendications**

1. Procédé pour convertir des données d'image d'entrée progressives en des données d'image de sortie entrelacées, comprenant les étapes,
si la luminosité de l'image n'est pas égale et n'est pas supérieure à un niveau prédéterminé, de sélection successivement soit de chacune des lignes de balayage de numéros impairs, soit de chacune des lignes de balayage de numéros pairs des données d'image d'entrée en tant que ligne de balayage actuelle, d'ajout des données d'image de la ligne de balayage suivante immédiatement au-dessous de la ligne de balayage actuelle respective aux données d'image de la ligne de balayage actuelle pour chaque ligne de balayage sélectionnée, et de sortie du résultat de l'ajout en tant que données d'image de sortie, ou
si la luminosité de l'image est supérieure ou égale à un niveau prédéterminé, de sélection soit de toutes les lignes de numéros impairs, soit de toutes les lignes de numéros pairs, et de sortie des lignes sélectionnées en tant que données d'image de sortie.

2. Procédé de conversion progressif à entrelacé selon la revendication 1, dans lequel l'ajout comprend l'ajout des valeurs de luminosité des données d'image.

3. Procédé de conversion progressif à entrelacé selon la revendication 1 ou 2, comprenant en outre la détermination de la luminosité de l'image sur la base d'une quantité de gain d'un circuit de commande de gain automatique (120) qui amplifie les données d'image en fonction de la luminosité de l'image.

4. Appareil de traitement d'image comprenant une unité de conversion progressif à entrelacé (190) qui convertit des données d'image d'entrée progressives en des données d'image de sortie entrelacées en exécutant le procédé de conversion progressif à entrelacé selon l'une quelconque des revendications 1 à 3.

5. Appareil de formation d'image comprenant :

un dispositif de formation d'image (110) qui délivre des données d'image progressives ; et
un appareil de traitement d'image selon la revendication 4.

FIG. 1

# FIG. 2A

G-SIGNAL

# FIG. 2B

R-SIGNAL

# FIG. 2C

B-SIGNAL

# FIG. 3

# FIG. 4

| 0 | −0.5 | 0 | −0.5 | 0 |
| --- | --- | --- | --- | --- |
| −0.5 | 0 | −1.0 | 0 | −0.5 |
| 0 | −1.0 | 9.0 | −1.0 | 0 |
| −0.5 | 0 | −1.0 | 0 | −0.5 |
| 0 | −0.5 | 0 | −0.5 | 0 |

# FIG. 5

(a) PROGRESSIVE READ-OUT                    (b) INTERLACE OUTPUT

# FIG. 6

(a) PROGRESSIVE READ-OUT                    (b) INTERLACE OUTPUT

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008028069 A
- JP 3821415 B
- US 20050168598 A1
- JP 05115057 A
- US 4924315 A